# EUROPÄISCHE PATENTSCHRIFT

(11) **EP 2 715 177 B1**
(45) Veröffentlichungstag und Bekanntmachung des Hinweises auf die Patenterteilung: **24.02.2016**
(21) Anmeldenummer: 12717667.5
(22) Anmeldetag: 25.04.2012
(51) Int. Cl.: F16D 48/02, F16D 25/12

(54) **KUPPLUNGSANORDNUNG UND ANTRIEBSSTRANG FÜR EIN KRAFTFAHRZEUG**
CLUTCH ASSEMBLY AND DRIVE TRAIN FOR A MOTOR VEHICLE
ENSEMBLE EMBRAYAGE ET CHAÎNE CINÉMATIQUE POUR UN VÉHICULE AUTOMOBILE

(30) Priorität: 23.05.2011 DE 102011102277
(43) Veröffentlichungstag der Anmeldung: 09.04.2014
(73) Patentinhaber: GETRAG Getriebe- und Zahnradfabrik Hermann Hagenmeyer GmbH & Cie KG, 74199 Untergruppenbach (DE)
(72) Erfinder: RUEHLE, Guenter, 74369 Löchgau (DE); SCHWEIHER, Mark, 74348 Lauffen (DE)
(74) Vertreter: Witte, Weller & Partner Patentanwälte mbB
(86) Internationale Anmeldenummer: PCT/EP2012/057507
(87) Internationale Veröffentlichungsnummer: WO 2012/159838

(56) Entgegenhaltungen:
- WO-A1-2005/064187
- WO-A1-2006/002450
- US-A1- 2003 230 461
- US-A1- 2009 038 908

## Beschreibung

Die vorliegende Erfindung betrifft eine Kupplungsanordnung für einen Antriebsstrang eines Kraftfahrzeuges, mit einer ersten Kupplung, einer zweiten Kupplung und einer hydraulischen Aktuatoranordriung, wobei die Aktuatoranordnung einen ersten Hydraulikzylinder zum Betätigen der ersten Kupplung und einen zweiten Hydraulikzylinder zum Betätigen der zweiten Kupplung aufweist, und wobei die Aktuatoranordnung eine mittels eines Elektromotors angetriebene Aktuatorpumpe aufweist, die in zwei Drehrichtungen betreibbar ist.

Ferner betrifft die vorliegende Erfindung einen Antriebsstrang für ein Kraftfahrzeug, mit einer ersten elektrischen Maschine zur Bereitstellung von Antriebsleistung, wobei die erste elektrische Maschine mit einem elektrischen Energiespeicher verbunden ist, mit einem Differential, das Antriebsleistung auf zwei angetriebene Räder des Kraftfahrzeuges verteilen kann, mit einer ersten Getriebeanordnung, die die erste elektrische Maschine mit dem Differential verbindet, mit einem Verbrennungsmotor, mit einer zweiten elektrischen Maschine, die mit dem Verbrennungsmotor gekoppelt ist, um in einem Generatorbetrieb den elektrischen Energiespeicher zu laden, und mit einer zweiten Getriebeanordnung, die den Verbrennungsmotor mit dem Differential verbindet, wobei die zweite Getriebeanordnung eine erste Gangstufe und eine zweite Gangstufe aufweist, die mittels einer Kupplungsanordnung alternativ zur Übertragung von Antriebsleistung von dem Verbrennungsmotor zu dem Differential schaltbar sind.

Eine Kupplungsanordnung der oben beschriebenen Art ist beispielsweise aus dem Dokument EP 1 236-918 B1 bekannt.

In diesem Dokument wird eine Kupplungsanordnung für ein Doppelkupplungsgetriebe vorgeschlagen, wobei die zwei Kupplungen als nasslaufende Lamellenkupplungen ausgebildet und jeweils mittels eines hydraulischen Nehmerzylinders betätigbar sind. Jeder der Nehmerzylinder ist direkt mit einer jeweiligen Fluidpumpe verbunden. Der Druck in dem Nehmerzylinder wird über den Volumenstrom der jeweiligen Pumpe geregelt.

Ein Antriebsstrang der oben beschriebenen Art ist insbesondere als so genannter Range-Extender-Antrieb verwendbar. Dabei wird das Fahrzeug mittels der ersten elektrischen Maschine angetrieben. Der Verbrennungsmotor kann die zweite elektrische Maschine im Generatorbetrieb antreiben, um den elektrischen Energiespeicher zu laden. Insbesondere bei höheren Geschwindigkeiten ist es mittels der zweiten Getriebeanordnung jedoch auch möglich, den Verbrennungsmotor als Antrieb für das Kraftfahrzeug zu verwenden.

Die zweite Getriebeanordnung weist dabei zwei Gangstufen auf, die alternativ zur Übertragung von Antriebsleistung geschaltet werden können.

Es ist die Aufgabe der Erfindung, eine verbesserte Kupplungsanordnung und einen verbesserten Antriebsstrang anzugeben.

Diese Aufgabe wird durch eine Kupplungsanordnung gemäß Anspruch 1 gelöst.

Ferner wird die obige Aufgabe gelöst durch einen Antriebsstrang nach Anspruch 7. US 2009/0038908 offenbart eine Kupplungsanordnung nach dem Oberbegriff des Anspruchs 1.

Die erfindungsgemäße Kupplungsanordnung eignet sich für beliebige Antriebsstränge, die zwei Kupplungen aufweisen, die alternativ zu betätigen sind. Da zur Betätigung der zwei Kupplungen nur eine einzelne Aktuatorpumpe notwendig ist, kann die Kupplungsanordnung kosten- und bauraumgünstig aufgebaut werden.

Die erste und die zweite Kupplung können nasslaufende Kupplungen wie Lamellenkupplungen sein. Es kann sich jedoch auch um Reibkupplungen trockener Bauart handeln. Ferner kann es sich bei den Kupplungen um Schaltkupplungen handeln, wie sie beispielsweise in Form von Synchronisierungseinrichtungen in Vorgelegegetrieben verwendet werden.

Besonders bevorzugt ist die Verwendung in einem Range-Extender-Antriebsstrang, der zwei Gangstufen aufweist. In einem derartigen Range-Extender-Antriebsstrang dienen die zwei Gangstufen zur Übertragung von Antriebsleistung des Verbrennungsmotors. Diese Betriebsart wird in einem solchen Antriebsstrang bestimmungsgemäß nur bei höheren Geschwindigkeiten verwendet. Demzufolge ist es auch aus Komfortgründen in der Regel nicht gefordert, dass Gangwechsel ohne Zugkraftunterbrechnung durchgeführt werden.

Die Aufgabe wird somit vollkommen gelöst.

Bei der erfindungsgemäßen Kupplungsanordnung ist es von besonderem Vorteil, wenn der erste Anschluss über eine erste Verbindungsleitung direkt mit dem ersten Hydraulikzylinder verbunden ist und/oder wenn der zweite Anschluss über eine zweite Verbindungsleitung direkt mit dem zweiten Hydraulikzylinder verbunden ist.

Bei der direkten Verbindung der Aktuatorpumpe mit einem jeweiligen Hydraulikzylinder sind teure Druckregelventile nicht notwendig. Die Kupplung wird dadurch betätigt, dass der Druck in dem Hydraulikzylinder einstellbar ist. Bei der direkten Verbindung des Hydraulikzylinders mit der Aktuatorpumpe wird dieser Druck über den Volumenstrom eingestellt, der von der Aktuatorpumpe gefördert wird.

Ferner ist es hierbei vorteilhaft, wenn die erste Verbindungsleitung über eine erste Blende mit einem Tank verbunden ist und/oder wenn die zweite Verbindungsleitung über eine zweite Blende mit einem Tank verbunden ist.

Unter einem Tank wird vorliegend jede Art von Reservoir für Hydraulikfluid verstanden. Ferner ist der Begriff des Tanks funktional gleichzusetzen mit einem Ort innerhalb des Hydrauliksystems, bei dem das Hydraulikfluid nicht unter Druck steht. Durch das Bereitstellen einer solchen Blende fördert die Aktuatorpumpe ständig einen gewissen Volumenstrom, was dazu führt, dass sich die Regelbarkeit der Pumpe bzw. des Druckes verbessern lässt.

Insgesamt ist es vorteilhaft, wenn der erste Anschluss über ein erstes Rückschlagventil mit einem Tank verbunden ist und/oder wenn der zweite Anschluss über ein zweites Rückschlagventil mit einem Tank verbunden ist.

Auf diese Weise kann sichergestellt werden, dass der jeweilige Anschluss der Aktuatorpumpe nicht mit dem Tank verbunden ist, wenn er in Abhängigkeit von der Drehrichtung als Druckanschluss arbeitet. Ferner kann gewährleistet werden, dass der jeweilige Anschluss dann, wenn er als Sauganschluss arbeitet, über das Rückschlagventil Hydraulikfluid aus dem Tank fördern kann.

Das erste und das zweite Rückschlagventil sind dabei vorzugsweise nach der Art von Schnüffelventilen ausgebildet.

Gemäß einer weiteren bevorzugten Ausführungsform sind die erste Kupplung und die zweite Kupplung als nasslaufende Kupplungen ausgebildet, wobei die Aktuatoranordnung dazu ausgebildet ist, die Kupplungen mit Schmierfluid zu versorgen.

Bei dieser Ausführungsform dient die Aktuatoranordnung nicht nur zum Betätigen der ersten und der zweiten Kupplung sondern ist auch dazu ausgelegt, die erste und die zweite Kupplung mit Schmier- bzw. Kühlfluid zu versorgen. Der Volumenstrom zur Schmierung bzw. Kühlung der Kupplungen wird dabei vorzugsweise aus dem von der Aktuatorpumpe jeweils bereitgestellten Volumenstrom abgezweigt. Demzufolge kann bei dieser Ausführungsform auf eine separate Schmierfluidpumpe verzichtet werden.

Dabei ist es von besonderem Vorzug, wenn der erste Anschluss und/oder der zweite Anschluss mit einer Schmierfluidleitung verbunden ist, über die den Kupplungen Schmierfluid zugeführt wird.

Bei der Schmierfluidleitung kann es sich um eine einzelne Leitung handeln, die sich dann auf die zwei Kupplungen verzweigt. Alternativ ist es auch möglich, dass der erste Anschluss mit einer ersten Schmierfluidleitung verbunden ist, und der zweite Anschluss mit einer zweiten Schmierfluidleitung, die den Kupplungen jeweils separat Schmierfluid zuführen.

Hierbei ist es ferner vorteilhaft, wenn der erste Anschluss über ein drittes Rückschlagventil mit der Schmierfluidleitung verbunden ist und/oder wenn der zweite Anschluss über ein viertes Rückschlagventil mit der Schmierfluidleitung verbunden ist.

Wenn ein Anschluss in Abhängigkeit von der Drehrichtung als Druckanschluss arbeitet, öffnet das mit diesem Anschluss verbundene Rückschlagventil, um Schmierfluid abzuzweigen. Wenn der Anschluss hingegen aufgrund der Drehrichtung als Sauganschluss ausgebildet ist, ist das damit verbundene dritte oder vierte Rückschlagventil geschlossen.

Durch die Rückschlagventile wird gewährleistet, dass das Hydrauliksystem bei der Befüllung entlüftet wird und andererseits durch die Aktuatorpumpe keine Luft in das Hydrauliksystem gepumpt wird.

Gemäß einer weiteren bevorzugten Ausführungsform ist in der Verbindung zwischen dem ersten Anschluss und der Schmierfluidleitung eine erste Blende angeordnet, und/oder in der Verbindung zwischen dem zweiten Anschluss und der Schmierfluidleitung ist eine zweite Blende angeordnet.

Alternativ kann auch nur eine einzelne Blende in der Schmierfluidleitung vorgesehen sein.

Wie oben erwähnt, kann eine derartige Blende die Regelbarkeit der Aktuatorpumpe bzw. der Kupplungsanordnung verbessern. Generell kann eine solche Blende dabei in einer Verbindungsleitung zu dem jeweiligen Hydraulikzylinder vorgesehen sein.

Vorliegend wird vorgeschlagen, die Blende in den Schmierfluidkreislauf zu integrieren. Hierdurch erfüllt diese Blende zum einen den Zweck, dass die Regelbarkeit der Aktuatorpumpe bzw. des Drucks des jeweils zu befüllenden Hydraulikzylinders verbessert wird. Zum anderen wird der Schmierfluidstrom hierdurch begrenzt, so dass die Aktuatorpumpe relativ klein dimensioniert werden kann.

Bei dem erfindungsgemäßen Antriebsstrang ist es von besonderem Vorteil, wenn die zweite Getriebeanordnung ausschließlich die erste Gangstufe und die zweite Gangstufe aufweist.

Bei dem erfindungsgemäßen Antriebsstrang wird der Verbrennungsmotor vorzugsweise nur in einem eingeschränkten Geschwindigkeitsbereich des Kraftfahrzeuges eingesetzt. Daher ist die Verwendung von nur zwei Gangstufen in der zweiten Getriebeanordnung in der Regel hinreichend.

Demzufolge kann die zweite Getriebeanordnung des Antriebsstranges mit geringen Kosten und geringem Gewicht realisiert werden.

Gemäß einer vorteilhaften Ausführungsform weist die Kupplungsanordnung eine erste Kupplung und eine zweite Kupplung auf, von denen wenigstens eine als Lastschaltkupplung ausgebildet ist.

Bei dieser Ausführungsform kann die wenigstens eine Lastschaltkupplung nicht nur dazu verwendet werden, um die zugehörige Gangstufe zu schalten. Vielmehr kann die Lastschaltkupplung im Gegensatz zu einer Synchronkupplung beispielsweise auch zum Anfahren verwendet werden. In letzterem Fall ist es beispielsweise möglich, bei Ausfall der elektrischen Maschine das Fahrzeug rein verbrennungsmotorisch zu betreiben, auch wenn in diesem Fall ein Anfahrvorgang die Überwindung einer hohen Differenzdrehzahl in der Lastschaltkupplung bedeuten kann.

Von Vorteil bei dieser Ausführungsform ist ferner, dass eine von den Gangstufen-Kupplungen separate Anfahr- und/oder Trennkupplung nicht notwendig ist.

Der Begriff der Lastschaltkupplung bezieht sich vorliegend allgemein auf eine Reibkupplung, die auch schlupfend Antriebsleistung übertragen kann. Der Begriff der Lastschaltkupplung soll nicht bedeuten, dass Wechsel zwischen den Gangstufen unter Last erfolgen können. Bei der Verwendung einer Lastschaltkupplung für jede der zwei Gangstufen sind jedoch generell auch Gangstufenwechsel unter Last möglich, insbesondere auch ohne Zugkraftunterbrechung.

Von besonderem Vorteil ist es hierbei, wenn die Lastschaltkupplung als nasslaufende Lamellenkupplung ausgebildet ist.

Derartige nasslaufende Lamellenkupplungen bauen zum einen kompakt und sind zum anderen auch zur Übertragung von großer Antriebsleistung konfigurierbar.

Insgesamt ist es ferner bevorzugt, wenn die Lastschaltkupplung bzw. die erste und die zweite Kupplung koaxial zu einer Verbindungswelle angeordnet sind, mittels der die zweite elektrische Maschine und der Verbrennungsmotor miteinander gekoppelt sind.

Diese Ausführungsform ermöglicht eine kompakte Anbindung der Verbindungswelle an die zweite Getriebeanordnung.

Gemäß einer weiteren bevorzugten Ausführungsform ist vorgesehen, die zweite elektrische Maschine drehfest mit einer Ausgangswelle des Verbrennungsmotors zu verbinden.

Die Verbindung kann beispielsweise über eine Verbindungswelle erfolgen. Dabei kann die Verbindung gegebenenfalls über einen Schwingungsdämpfer erfolgen, der eine begrenzte Verdrehbarkeit zwischen der Ausgangswelle des Verbrennungsmotors und der zweiten elektrischen Maschine vorsieht und dazu ausgelegt ist, die von dem Verbrennungsmotor erzeugten Drehschwingungen zu dämpfen.

Wenn wenigstens eine der zwei Kupplungen für die zwei Gangstufen als Lastschaltkupplung ausgelegt ist, kann die Verbindungswelle dabei als Vollwelle ausgebildet sein. Insbesondere ist es hierbei nicht notwendig, die Ausgangswelle des Verbrennungsmotors und die Ausgangswelle der zweiten elektrischen Maschine über eine separate Trennkupplung miteinander zu verbinden. Hierdurch kann weiterer Bauraum eingespart werden.

Ferner ist es gemäß einer weiteren insgesamt bevorzugten Ausführungsform vorgesehen, dass die zweite Getriebeanordnung ein erstes Losrad aufweist, das der ersten Gangstufe zugeordnet ist, und ein zweites Losrad aufweist, das der zweiten Gangstufe zugeordnet ist, wobei das erste und das zweite Losrad koaxial zu einer Verbindungswelle angeordnet sind, mittels der die zweite elektrische Maschine und der Verbrennungsmotor miteinander gekoppelt sind. Insbesondere dann, wenn auch die erste und die zweite Kupplung für die zwei Gangstufen koaxial zu der Verbindungswelle angeordnet sind, kann Antriebsleistung gegebenenfalls auf einfache Weise von der Verbindungswelle über eine der zwei Gangstufen der zweiten Getriebeanordnung auf das Differential geführt werden.

Dabei ist es von besonderem Vorzug, wenn das erste und das zweite Losrad direkt an der Verbindungswelle drehbar gelagert sind.

Hierdurch kann auch in radialer Richtung weiterer Bauraum eingespart werden. Aufwändige Hohlwellenkonstruktionen, die beim Vorsehen einer Trennkupplung im Bereich der Verbindungswelle vorgesehen werden müssten, können auf diese Weise vermieden werden.

Auch ist es allgemein bevorzugt, wenn die Kupplungsanordnung eine erste und eine zweite Kupplung aufweist, die koaxial zu der Verbindungswelle angeordnet sind, wobei das erste und das zweite Losrad in axialer Richtung zwischen der ersten und der zweiten Kupplung angeordnet sind.

Hierdurch kann eine Aktuatorik zum Betätigen der ersten und der zweiten Kupplung auf vergleichsweise einfache Weise in die zweite Getriebeanordnung integriert werden.

Alternativ ist es jedoch auch möglich, die erste und die zweite Kupplung zwischen dem ersten und dem zweiten Losrad anzuordnen.

Eine weitere bevorzugte Ausführungsform sieht vor, dass das erste Losrad mit einem ersten Festrad in Eingriff steht, wobei das zweite Losrad mit einem zweiten Festrad in Eingriff steht, wobei das erste und das zweite Festrad an einer Zwischenwelle festgelegt sind, und wobei an der Zwischenwelle ein Antriebszahnrad festgelegt ist, das mit einem Eingangsglied (beispielsweise einem Zahnrad) des Differentials in Eingriff steht.

Auf diese Weise kann Antriebsleistung alternativ über die erste oder die zweite Gangstufe auf das Differential geführt werden. Ferner ergibt sich die Möglichkeit, geeignete Übersetzungen für die erste und die zweite Gangstufe einzurichten.

Dabei ist es von besonderem Vorzug, wenn das zweite Antriebszahnrad in axialer Richtung auf einer Seite des ersten und des zweiten Festrades angeordnet ist.

Diese Ausführungsform ist insbesondere dann bevorzugt, wenn die zwei Festräder der ersten und der zweiten Gangstufe in axialer Richtung unmittelbar benachbart zueinander angeordnet sind.

Bei einer Ausführungsform, bei der die zwei Kupplungen zwischen den Losrädern angeordnet sind, kann das Antriebszahnrad auch zwischen dem ersten und dem zweiten Festrad angeordnet sein.

Insgesamt ist es ferner bevorzugt, wenn die Übersetzungen der ersten und der zweiten Getriebestufe so gewählt sind, dass ein Antrieb des Fahrzeuges mittels des Verbrennungsmotors bestimmungsgemäß nur bei Fahrzeuggeschwindigkeiten größer 30 km/h möglich ist.

Unter einem bestimmungsgemäßen Antrieb wird hierbei verstanden, dass die jeweils leistungsübertragende Kupplung vollständig oder nahezu vollständig geschlossen ist, also im Wesentlichen nicht schlupft (Mikroschlupf).

Auf diese Weise ist vorgesehen, dass ein verbrennungsmotorischer Antrieb in der Regel nur bei höheren Fahrzeuggeschwindigkeiten möglich ist. Zwei Gangstufen sind hierfür hinreichend.

Von besonderem Vorzug ist es, wenn die Geschwindigkeitsschwelle bei größer 50 km/h liegt, insbesondere bei größer 80 km/h.

Beim Schalten der Gangstufen kann der Verbrennungsmotor unterstützt durch den Generator auf ein Zieldrehzahlniveau beschleunigt oder verzögert werden. Hierdurch kann die Schaltarbeit in den jeweiligen Kupplungen reduziert werden. Ferner kann das Fahrzeug während einer Schaltung auch weiterhin durch die erste elektrische Maschine angetrieben werden, so dass ebenfalls eine Zugkraftunterbrechung vermieden werden kann.

Da die Kupplungen vorzugsweise als lastschaltfähige Lamellenkupplungen ausgebildet sind, können diese Kupplungen in kritischen Drehzahlbereichen auch im Mikroschlupf betrieben werden. Durch diese Maßnahme können das Gewicht und das Massenträgheitsmoment eines Torsions- bzw. Schwingungsdämpfers im Bereich einer Verbindungswelle zwischen dem Verbrennungsmotor und der zweiten elektrischen Maschine reduziert werden, ohne dass akustische Nachteile auftreten.

Insgesamt kann der Antriebsstrang mit einer geringen Anzahl von Bauelementen aufgebaut werden. Ferner kann der Antriebsstrang mit geringem Gewicht innerhalb eines geringen Bauraumes bei geringen Kosten realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einer ersten Ausführungsform eines Antriebsstranges;
- Fig. 2: eine schematische Darstellung eines Teils einer weiteren Ausführungsform eines Antriebsstranges; und
- Fig. 3: eine erfindungsgemäße Kupplungsanordnung für einen Antriebsstrang.

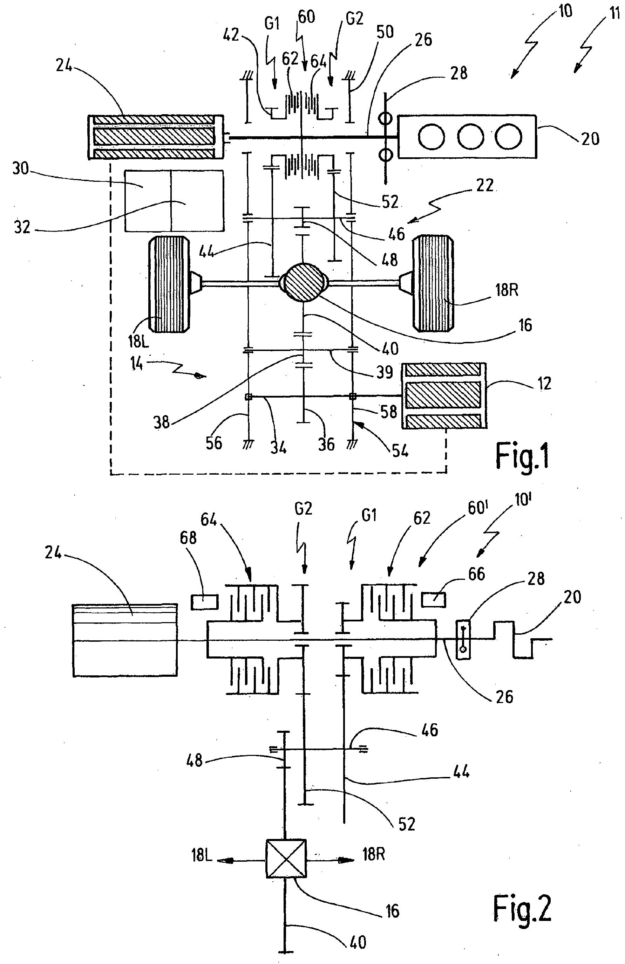

In Fig. 1 ist ein Antriebsstrang eines Kraftfahrzeuges 11 schematisch dargestellt und mit 10 bezeichnet.

Der Antriebsstrang 10 weist eine erste elektrische Maschine 12 auf, die dazu ausgelegt ist, Antriebsleistung für das Kraftfahrzeug 11 bereitzustellen. Ferner weist der Antriebsstrang 10 ein Differential 16 auf, das dazu ausgebildet ist, Antriebsleistung auf zwei angetriebene Räder 18L, 18R (oder auf zwei Achsen) des Kraftfahrzeuges 11 zu verteilen. Antriebsleistung von der ersten elektrischen Maschine 12 wird über eine erste Getriebeanordnung 14 auf das Differential 16 übertragen.

Ferner beinhaltet der Antriebsstrang 10 einen Verbrennungsmotor 20. Von dem Verbrennungsmotor 20 erzeugte Antriebsleistung kann über eine zweite Getriebeanordnung 22 auf das Differential 16 übertragen werden. Der Antriebsstrang 10 beinhaltet ferner eine zweite elektrische Maschine 24, die insbesondere als Generator betrieben wird und über eine Verbindungswelle 26 drehfest mit einer Ausgangswelle (Kurbelwelle) des Verbrennungsmotors 20 verbunden ist. Dabei kann an der Verbindungswelle 26 ein Schwingungs- bzw. Torsionsdämpfer 28 vorgesehen sein, um Drehschwingungen des Verbrennungsmotors 20 zu dämpfen.

Die erste elektrische Maschine 12 und die zweite elektrische Maschine 24 sind mit einer Leistungssteuereinheit 30 verbunden, die wiederum mit einem elektrischen Energiespeicher 32 (Fahrzeugbatterie) verbunden ist.

Der Antriebsstrang (10) ist als Range-Extender-Antriebsstrang ausgelegt. Beispielsweise kann das Fahrzeug rein elektromotorisch über die erste elektrische Maschine 12 fahren. Sofern das Ladungsniveau des elektrischen Energiespeichers 32 unter ein bestimmtes Grenzniveau abfällt, kann der Verbrennungsmotor 20 gestartet werden, um auf diese Weise die zweite elektrische Maschine 24 als Generator anzutreiben, über den der elektrische Energiespeicher 32 wieder aufgeladen wird.

Ferner ist ein rein verbrennungsmotorischer Antrieb über die zweite Getriebeanordnung 22 möglich, jedoch vorzugsweise ausschließlich in Geschwindigkeitsbereichen oberhalb von 30 km/h, bevorzugt oberhalb von 50 km/h, und besonders bevorzugt oberhalb von 80 km/h.

Die erste Getriebeanordnung 14 weist eine erste Antriebswelle 34 auf, die mit einer Ausgangswelle der ersten elektrischen Maschine 12 gekoppelt ist. An der ersten Antriebswelle ist ein Zahnrad 36 festgelegt, das mit einem ersten Antriebszahnrad (erstes Antriebsritzel) 38 in Eingriff steht. Das erste Antriebszahnrad 38 ist an einer ersten Zwischenwelle 39 festgelegt, die parallel zu der ersten Antriebswelle 34 ausgerichtet ist. Das erste Antriebszahnrad 38 steht in Eingriff mit einem Eingangsglied (beispielsweise einem Zahnrad) des Differentials 16.

Die erste Antriebswelle 34 und die erste Zwischenwelle 39 sind quer zu einer Längsachse des Kraftfahrzeuges 11 ausgerichtet, insbesondere etwa parallel zu der angetriebenen Achse der Räder 18L, 18R.

Die zweite Getriebeanordnung 22 weist eine erste Gangstufe G1 und eine zweite Gangstufe G2 auf. Der Verbrennungsmotor 20 kann folglich über die unterschiedlichen Übersetzungen der ersten und der zweiten Gangstufe G1, G2 mit dem Differential 16 verbunden werden.

Die erste Gangstufe G1 beinhaltet ein erstes Losrad 42, das drehbar an der Verbindungswelle 26 gelagert ist. Das erste Losrad 42 steht mit einem ersten Festrad 44 in Eingriff, das an einer zweiten Zwischenwelle 46 festgelegt ist. An der zweiten Zwischenwelle 46 ist ferner ein zweites Antriebszahnrad 48 (zweites Antriebsritzel) festgelegt, das mit dem Eingangsglied 40 des Differentials 16 in Eingriff steht.

Die zweite Gangstufe G2 weist ein zweites Losrad 50 auf, das drehbar an der Verbindungswelle 26 gelagert ist, sowie ein zweites Festrad 52, das drehfest mit der zweiten Zwischenwelle 46 verbunden ist.

Das zweite Antriebszahnrad 48 ist in axialer Richtung der zweiten Zwischenwelle 46 zwischen dem ersten Festrad 44 und dem zweiten Festrad 52 angeordnet.

Die zweite Zwischenwelle 46 und die Verbindungswelle 26 sind ebenfalls quer zu einer Längsachse des Kraftfahrzeuges 11 ausgerichtet, und insbesondere parallel zu der ersten Antriebswelle 34 und der ersten Zwischenwelle 39.

Der Antriebsstrang 10 weist ferner ein Gehäuse 54 auf, das eine erste, sich im Wesentlichen parallel zur Längsachse des Kraftfahrzeuges 11 erstreckende Gehäusewand 56 und eine zweite, sich im Wesentlichen parallel zu der Längsachse des Kraftfahrzeuges erstreckende zweite Gehäusewand 58 aufweist. Die erste Antriebswelle 34, die erste Zwischenwelle 39 sowie die zweite Zwischenwelle 46 und gegebenenfalls die Verbindungswelle 26 sind drehbar in Bezug auf das Gehäuse 54 gelagert, vorzugsweise mittels jeweiliger Radiallager an der ersten Gehäusewand 56 und der zweiten Gehäusewand 58.

Zum Schalten der zwei Gangstufen G1, G2 ist eine Kupplungsanordnung 60 vorgesehen. Die Kupplungsanordnung 60 weist eine erste Kupplung 62 und eine zweite Kupplung 64 auf. Die erste und die zweite Kupplung 62, 64 sind in axialer Richtung der Verbindungswelle 26 zwischen dem ersten Losrad 42 und dem zweiten Losrad 50 angeordnet. Die erste und die zweite Kupplung 62, 64 sind jeweils als Lastschaltkupplungen, insbesondere als nasslaufende Lamellenkupplungen, ausgebildet. Die erste Kupplung 62 und die zweite Kupplung 64 weisen ein gemeinsames Eingangsglied auf, das drehfest mit der Verbindungswelle 26 verbunden ist. Ein Ausgangsglied der ersten Kupplung 62 ist mit dem ersten Losrad 42 verbunden. Ein Ausgangsglied der zweiten Kupplung 64 ist mit dem zweiten Losrad 50 verbunden.

Die erste und die zweite Kupplung 62, 64 können bei einer geeigneten Aktuatorik so angesteuert werden, dass sie bei einem Gangwechsel überschneidend betätigt werden, um Zugkraftunterbrechungen zu vermeiden. Bevorzugt werden die zwei Kupplungen 62, 64 jedoch mittels einer Aktuatoranordnung betätigt, die eine Umschaltung von einer Gangstufe auf eine andere Gangstufe nur mit Zugkraftunterbrechung ermöglicht, wie es nachstehend noch beschrieben werden wird. Eine derartige Aktuatoranordnung ist bevorzugt als hydraulische Aktuatoranordnung ausgebildet, zumal es bei nasslaufenden Lamellenkupplungen in der Regel auch notwendig ist, diese mittels eines Fluides zu schmieren bzw. zu kühlen.

Die durch die erste und die zweite Gangstufe G1, G2 eingerichteten Übersetzungen ermöglichen im bestimmungsgemäßen Betrieb einen Antrieb des Kraftfahrzeuges 11 in Geschwindigkeiten oberhalb der oben genannten Geschwindigkeitsschwellen (beispielsweise größer 30 km/h). Da zumindest eine der zwei Kupplungen 62, 64 als Lastschaltkupplung ausgebildet ist, ist jedoch in einem Notbetrieb auch ein Anfahren über den Verbrennungsmotor 20 möglich.

In Fig. 2 ist ein Teil einer alternativen Ausführungsform eines Antriebsstranges 10' gezeigt. Der Antriebsstrang 10' entspricht hinsichtlich Aufbau und Funktionsweise generell dem Antriebsstrang 10 der Fig. 1. Gleiche Elemente sind daher mit gleichen Bezugsziffern versehen. Im Folgenden werden im Wesentlichen die Unterschiede erläutert.

Bei dem Antriebsstrang 10' sind das erste und das zweite Losrad 42, 50 zueinander benachbart angeordnet. Die Kupplungsanordnung 60' weist eine erste Kupplung 62 für die erste Gangstufe G1 auf, die in axialer Richtung gesehen zwischen dem ersten Losrad 42 und dem Verbrennungsmotor 20 angeordnet ist. Die zweite Kupplung 64 ist in axialer Richtung gesehen zwischen dem zweiten Losrad 50 und der zweiten elektrischen Maschine 24 angeordnet.

Die erste Kupplung 62 wird mittels eines schematisch angedeuteten ersten Hydraulikzylinders 66 betätigt, und die zweite Kupplung 64 wird mittels eines schematisch angedeuteten zweiten Hydraulikzylinders 68 betätigt. Die Betätigungsrichtungen der Hydraulikzylinder 66, 68 weisen aufeinander zu.

Das zweite Antriebszahnrad 48 ist in axialer Richtung gesehen neben den zwei Festrädern 44, 52 angeordnet und steht mit dem Eingangsglied 40 des Differentials 16 in Eingriff. Der Aufbau des Antriebsstranges 10' entspricht dem des Antriebsstranges 10 der Fig. 1, soweit die erste elektrische Maschine 12 und die erste Getriebeanordnung 14 betroffen sind.

Bei dem Antriebsstrang 10' weisen die erste und die zweite Kupplung 62, 64 jeweils ein eigenes Eingangsglied auf, das drehfest mit der Verbindungswelle 26 verbunden ist. Durch die in axialer Richtung außen angreifenden Hydraulikzylinder 66, 68 kann jedoch der hierfür benötigte Bauraum leichter in den vorhandenen Gesamtbauraum integriert werden.

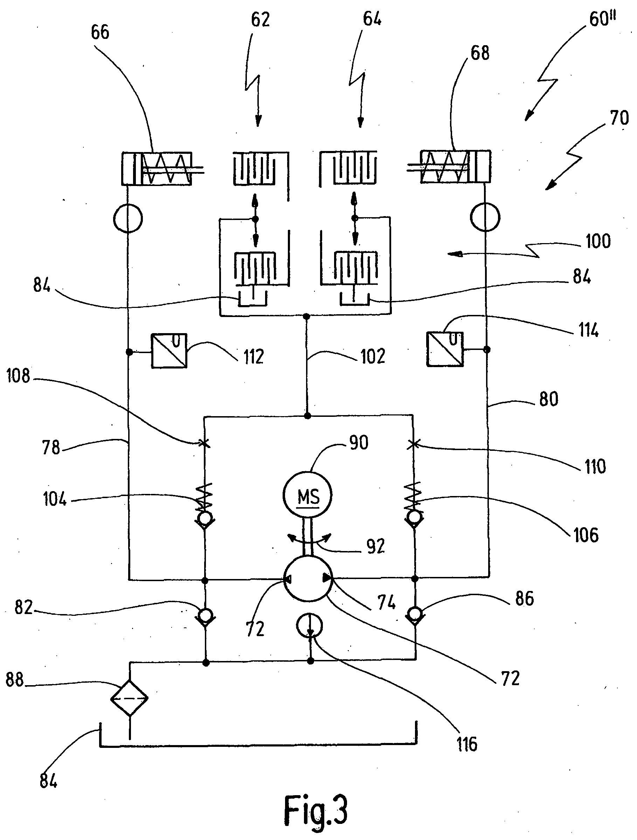

In Fig. 3 ist in schematischer Form eine Ausführungsform einer Kupplungsanordnung 60" gezeigt, die zur Verwendung in den Antriebssträngen 10, 10' der Fig. 1 und 2 verwendbar ist.

Die Kupplungsanordnung 60" der Fig. 3 weist eine Aktuatoranordnung 70 mit einer einzelnen Aktuatorpumpe 72 auf. Die Aktuatorpumpe 72 weist einen ersten Anschluss 74 und einen zweiten Anschluss 76 auf. Der erste Anschluss 74 ist über eine erste Verbindungsleitung 78 direkt mit einem ersten Hydraulikzylinder 66 zum Betätigen der ersten Kupplung 62 verbunden. Der zweite Anschluss 76 ist über eine zweite Verbindungsleitung 80 direkt mit einem zweiten Hydraulikzylinder 68 zum Betätigen der zweiten Kupplung 64 verbunden.

Der erste Anschluss 74 ist ferner über ein erstes Rückschlagventil 82 (erstes Schnüffelventil) mit einem Tank 84 verbunden. Der zweite Anschluss 76 ist über ein zweites Rückschlagventil 86 (zweites Schnüffelventil) mit dem Tank 84 verbunden. Die Verbindung kann dabei ein Fluidfilter 88 beinhalten, das zwischen den Rückschlagventilen 82, 86 und dem Tank 84 angeordnet ist.

Die Aktuatorpumpe 72 wird mittels eines Elektromotors 90 angetrieben, der als eigener Aktuatormotor ausgebildet ist und unabhängig von der ersten und der zweiten elektrischen Maschine 12, 24 betreibbar ist.

Der Elektromotor 90 ist dazu ausgelegt, die Aktuatorpumpe 72 in zwei Drehrichtungen anzutreiben, wie es in Fig. 3 bei 92 gezeigt ist.

In der ersten Drehrichtung ist der erste Anschluss 74 ein Druckanschluss und der zweite Anschluss 76 ein Sauganschluss, der über das zweite Rückschlagventil 86 Fluid aus dem Tank 84 ansaugt. In der zweiten Drehrichtung ist der erste Anschluss 74 ein Sauganschluss, der Fluid über das erste Rückschlagventil 82 aus dem Tank 84 ansaugt, und der zweite Anschluss 76 ist ein Druckanschluss. In der ersten Drehrichtung verhindert das erste Rückschlagventil 82, dass Fluid zurück in den Tank 84 strömt. In der zweiten Drehrichtung verhindert das zweite Rückschlagventil 86, dass Fluid zurück in den Tank 84 strömt.

Die Aktuatoranordnung 70 ist als eine Art bidirektionaler Pumpenaktuator ausgebildet. Die Steuerung des Weges und/oder des Druckes der zwei Hydraulikzylinder 66, 68 kann dabei über die Drehzahl des Elektromotors 90 und damit über den von der Aktuatorpumpe 72 jeweils bereitgestellten Volumenstrom geregelt bzw. gesteuert werden. Um die Steuer- bzw. Regelbarkeit zu verbessern, kann vorgesehen sein, die erste und/oder die zweite Verbindungsleitung 78, 80 über eine Blende mit dem Tank 84 zu verbinden.

Vorliegend dient die Aktuatoranordnung 70 jedoch auch dazu, die erste und die zweite Kupplung 62, 64 mit Schmierfluid zu versorgen. Hierzu weist die Aktuatoranordnung 70 einen Schmierkreis 100 auf, der eine Schmierfluidleitung 102 beinhaltet. Die Schmierfluidleitung 102 ist über geeignete Leitungen mit der ersten und der zweiten Kupplung 62, 64 verbunden, insbesondere mit radial innen liegenden Abschnitten der zwei Kupplungen 62, 64, um diese von radial innen mit Schmierfluid zu versorgen. Das Schmierfluid wird anschließend wieder dem Tank zugeführt, wie es schematisch unterhalb der zwei Kupplungen 62, 64 bei 84 gezeigt ist.

Die Schmierfluidleitung 102 ist über ein drittes Rückschlagventil 104 mit dem ersten Anschluss 74 verbunden. Ferner ist die Schmierfluidleitung 102 über ein viertes Rückschlagventil 106 mit dem zweiten Anschluss 76 der Aktuatorpumpe 72 verbunden. Das dritte und das vierte Rückschlagventil 104, 106 können vorzugsweise federbelastete Rückschlagventile sein, wie es in Fig. 3 schematisch angedeutet ist.

Ferner ist zwischen dem dritten Rückschlagventil 104 und der Schmierfluidleitung 102 eine erste Blende 108 vorgesehen. Zwischen dem vierten Rückschlagventil 106 und der Schmierfluidleitung 102 ist eine zweite Blende 110 vorgesehen.

In der ersten Drehrichtung, bei der der erste Anschluss 74 ein Druckanschluss ist, wird folglich über das dritte Rückschlagventil 104 und die erste Blende 108 Fluid der Schmierfluidleitung 102 zugeführt. Die erste Blende 108 dient dabei als Leckageblende und verbessert die Steuer- bzw. Regelbarkeit des Drucks in der ersten Verbindungsleitung 78. In der ersten Drehrichtung wird über den zweiten Anschluss 76 Fluid angesaugt, so dass das vierte Rückschlagventil 106 geschlossen ist.

In der zweiten Drehrichtung ist der zweite Anschluss 76 ein Druckanschluss, so dass Fluid über das vierte Rückschlagventil 106 und die zweite Blende 110 der Schmierfluidleitung 102 zugeführt wird. Auch hierbei dient die zweite Blende 110 zur Verbesserung der Regelbarkeit. In der zweiten Drehrichtung ist der erste Anschluss 74 ein Sauganschluss, so dass das dritte Rückschlagventil 104 geschlossen ist.

Optional ist vorgesehen, an der ersten Verbindungsleitung 78 einen ersten Drucksensor 112 vorzusehen, um den Fluiddruck in der ersten Verbindungsleitung 78 zu messen und gegebenenfalls regeln zu können. In entsprechender Weise kann ein zweiter Drucksensor 114 an der zweiten Verbindungsleitung 80 vorgesehen sein.

Schließlich kann im Bereich einer die Rückschlagventile 82, 86 mit dem Tank 84 verbindenden Leitung ein Temperatursensor 116 vorgesehen sein, der ebenfalls bevorzugt dafür dient, Steuer- bzw. Regelkennlinien einer nicht mehr dargestellten Steuereinrichtung in Abhängigkeit von der Temperatur des Fluides anzupassen.

Die erste und die zweite Kupplung 62, 64 sind vorzugsweise als normalerweise geöffnete Kupplungen ("normally open") ausgeführt. Der erste und der zweite Hydraulikzylinder 66, 68 können dabei als einseitig wirkende Hydraulikzylinder ausgebildet sein, die optional mit einer mechanischen Rückstellfeder ausgestattet sind, wie es in Fig. 3 gezeigt ist.

Da bei dieser Ausführungsform der Aktuatoranordnung 70 nur entweder der erste oder der zweite Hydraulikzylinder 66, 68 mit Druck versorgt wird, ist es bei dieser Ausgestaltung nicht möglich, Gangwechsel unter Last durchzuführen. Dies ist jedoch bei dieser Art von Antriebsstrang in der Regel nicht gefordert.

Durch die dargestellte Aktuatoranordnung 70 ist es möglich, das Hydrauliksystem bei der Befüllung der ersten oder der zweiten Verbindungsleitung 78, 80 zu entlüften. Ferner wird vermieden, dass durch die Aktuatorpumpe 72 Luft in das Hydrauliksystem gepumpt wird. Die zur Verbesserung der Regelbarkeit vorgesehenen Blenden sind in diesem Fall nicht direkt mit den Verbindungsleitungen 78, 80 verbunden, sondern sind in den Schmierkreis 100 integriert. Die durch die Leckageblende gewollte Leckage wird folglich nicht auf direktem Wege dem Tank 84 zugeführt, sondern wird den beiden Kupplungen 62, 64 zur Schmierung zugeführt. Hierdurch kann eine zusätzliche Schmierfluidpumpe entfallen. Die Rückschlagventile 104, 106 ermöglichen, unabhängig von der Drehrichtung der Aktuatorpumpe 72, Schmieröl den Kupplungen 62, 64 zur Verfügung zu stellen, ohne Gefahr zu laufen, dass von der Aktuatorpumpe 72 Luft angesaugt wird. Zur Sicherstellung der Funktion sind das dritte und das vierte Rückschlagventil 104, 106 jeweils vorzugsweise mit einer Vorlastfeder ausgerüstet, wie oben erwähnt.

Die Aktuatoranordnung 70 kann mit wenigen Bauteilen realisiert werden. Die Gangstufen G1, G2 können hierbei geschaltet werden, ohne dass mechanische Schaltungskomponenten, wie beispielsweise Schaltwalzen, Schaltstangen oder Ähnliches, erforderlich sind. Die Aktuatorpumpe 72 mit dem angekoppelten Elektromotor 90 kann an einem bauraumgünstigen Platz innerhalb des Antriebsstranges 10 angeordnet werden. Insgesamt ergeben sich im Vergleich zu einer herkömmlichen Schaltaktuatorik deutliche Bauraum- und Gewichtsvorteile.

Anstelle einer einzelnen Schmierfluidleitung 102 können auch zwei Schmierfluidleitungen vorgesehen sein, von denen eine die erste Blende 108 mit der ersten Kupplung 62 verbindet, und von denen die zweite Leitung die zweite Blende 110 mit der zweiten Kupplung 64 verbindet. Hierdurch kann gegebenenfalls der relativ kleine Volumenstrom besser ausgenutzt werden, da in diesem Fall jene Kupplung mit Schmieröl versorgt wird, die gerade betätigt wird.

## Patentansprüche

1. Kupplungsanordnung (60) für einen Antriebsstrang (10) eines Kraftfahrzeuges (11), mit
- einer ersten nasslaufenden Kupplung (62);
- einer zweiten nasslaufenden Kupplung (64);
- einer hydraulischen Aktuatoranordnung (70);
wobei die Aktuatoranordnung (70) einen ersten Hydraulikzylinder (66) zum Betätigen der ersten Kupplung (62) und einen zweiten Hydraulikzylinder (68) zum Betätigen der zweiten Kupplung (64) aufweist,
wobei die Aktuatoranordnung (70) eine mittels eines Elektromotors (90) angetriebene Aktuatorpumpe (72) aufweist, die in zwei Drehrichtungen (92) betreibbar ist,
wobei die Aktuatorpumpe (72) einen ersten Anschluss (74) aufweist, der mit dem ersten Hydraulikzylinder (62) verbunden ist, und einen zweiten Anschluss (76) aufweist, der mit dem zweiten Hydraulikzylinder (64) verbunden ist,
wobei die Aktuatoranordnung (70) je nach Drehrichtung (92) der Aktuatorpumpe (72) die erste oder die zweite Kupplung (62, 64) betätigt,
**dadurch gekennzeichnet, dass**
die hydraulische Aktuatoranordnung (70) dazu ausgebildet ist, die Kupplungen (72, 74) mit Schmierfluid zu versorgen, wobei der erste Anschluss (74) und der zweite Anschluss (76) mit einer Schmierfluidleitung (102) verbunden sind, über die den Kupplungen (62, 64) Schmierfluid zugeführt wird.

2. Kupplungsanordnung nach Anspruch 1, wobei der erste Anschluss (74) über eine erste Verbindungsleitung (78) direkt mit dem ersten Hydraulikzylinder (66) verbunden ist und/oder wobei der zweite Anschluss (76) über eine zweite Verbindungsleitung (80) direkt mit dem zweiten Hydraulikzylinder (68) verbunden ist.

3. Kupplungsanordnung nach Anspruch 2, wobei die erste Verbindungsleitung (78) über eine erste Blende (108) mit einem Tank (84) verbunden ist und/oder wobei die zweite Verbindungsleitung (80) über eine zweite Blende (110) mit einem Tank (84) verbunden ist.

4. Kupplungsanordnung nach einem der Ansprüche 1 bis 3, wobei der erste Anschluss (74) über ein erstes Rückschlagventil (82) mit einem Tank (84) verbunden ist und/oder wobei der zweite Anschluss (76) über ein zweites Rückschlagventil (84) mit einem Tank (84) verbunden ist.

5. Kupplungsanordnung nach einem der Ansprüche 1-4, wobei der erste Anschluss (74) über ein drittes Rückschlagventil (104) mit der Schmierfluidleitung (102) verbunden ist und/oder wobei der zweite Anschluss (76) über ein viertes Rückschlagventil (106) mit der Schmierfluidleitung (102) verbunden ist.

6. Kupplungsanordnung nach einem der Ansprüche 1-5, wobei in der Verbindung zwischen dem ersten Anschluss (74) und der Schmierfluidleitung (102) eine erste Blende (108) angeordnet ist und/oder wobei in der Verbindung zwischen dem zweiten Anschluss (76) und der Schmierfluidleitung (102) eine zweite Blende (110) angeordnet ist.

7. Antriebsstrang (10) für ein Kraftfahrzeug (11), mit
- einer ersten elektrischen Maschine (12) zur Bereitstellung von Antriebsleistung, wobei die erste elektrische Maschine (12) mit einem elektrischen Energiespeicher (32) verbunden ist;
- einem Differential (16), das Antriebsleistung auf zwei angetriebene Räder (18L, 18R) oder Achsen des Kraftfahrzeuges (11) verteilen kann;
- einer ersten Getriebeanordnung (14), die die erste elektrische Maschine (12) mit dem Differential (16) verbindet;
- einem Verbrennungsmotor (20);
- einer zweiten elektrischen Maschine (24), die mit dem Verbrennungsmotor (20) gekoppelt ist, um in einem Generatorbetrieb den elektrischen Energiespeicher (32) zu laden;
- einer zweiten Getriebeanordnung (22), die den Verbrennungsmotor (20) mit dem Differential (16) verbindet; und
- einer Kupplungsanordnung (60) nach einem der Ansprüche 1-6;
wobei die zweite Getriebeanordnung (22) eine erste Gangstufe (G1) und eine zweite Gangstufe (G2) aufweist, die mittels der Kupplungsanordnung (60) alternativ zur Übertragung von Antriebsleistung von dem Verbrennungsmotor (20) zu dem Differential (16) schaltbar sind.

8. Antriebsstrang nach Anspruch 7, wobei die Kupplungen (62, 64) koaxial zu einer Verbindungswelle (26) angeordnet sind, mittels der die zweite elektrische Maschine (24) und der Verbrennungsmotor (20) miteinander gekoppelt sind.

9. Antriebsstrang nach Anspruch 7 oder 8, wobei die zweite elektrische Maschine (24) drehfest mit einer Ausgangswelle des Verbrennungsmotors (20) verbunden ist.

10. Antriebsstrang nach einem der Ansprüche 7 bis 9, wobei die zweite Getriebeanordnung (24) ein erstes Losrad (42), das der ersten Getriebestufe (G1) zugeordnet ist, und ein zweites Losrad (50) aufweist, das der zweiten Getriebestufe (G2) zugeordnet ist, wobei das erste und das zweite Losrad (42, 50) koaxial zu einer Verbindungswelle (26) angeordnet sind, mittels der die zweite elektrische Maschine (24) und der Verbrennungsmotor (20) miteinander gekoppelt sind.

11. Antriebsstrang nach Anspruch 10, wobei das erste und das zweite Losrad (42, 50) direkt an der Verbindungswelle (26) drehbar gelagert sind.

12. Antriebsstrang nach Anspruch 10 oder 11, wobei die Kupplungsanordnung (60) eine erste und eine zweite lastschaltfähige Kupplung (62, 64) aufweist, die koaxial zu der Verbindungswelle (26) angeordnet sind, und wobei das erste und das zweite Losrad (42, 50) in axialer Richtung zwischen der ersten und der zweiten lastschaltfähigen Kupplung (62, 64) angeordnet sind.

13. Antriebsstrang nach einem der Ansprüche 7 bis 12, wobei die Übersetzungen der ersten und der zweiten Getriebestufe (G1, G2) so gewählt sind, dass ein Antrieb des Fahrzeuges (11) mittels des Verbrennungsmotors (20) bestimmungsgemäß nur bei Fahrzeuggeschwindigkeiten größer 30 km/h möglich ist.

## Claims

1. Clutch arrangement (60) for a drivetrain (10) of a motor vehicle (11), having
- a first wet-running clutch (62);
- a second wet-running clutch (64);
- a hydraulic actuator arrangement (70);
wherein the actuator arrangement (70) has a first hydraulic cylinder (66) for actuating the first clutch (62) and a second hydraulic cylinder (68) for actuating the second clutch (64),
wherein the actuator arrangement (70) has an actuator pump (72) which is driven by means of an electric motor (90) and which can be operated in two directions of rotation (92),
wherein the actuator pump (72) has a first port (74), which is connected to the first hydraulic cylinder (62), and a second port (76), which is connected to the second hydraulic cylinder (64), and
wherein the actuator arrangement (70) actuates the first or the second clutch (62, 64) depending on the direction of rotation (92) of the actuator pump (72),
**characterized in that**
the actuator arrangement (70) is designed to supply lubricating fluid to the clutches (62, 64), and wherein the first port (74) and the second port (76) are connected to a lubricating fluid line (102) via which lubricating fluid is supplied to the clutches (62, 64).

2. Clutch arrangement according to Claim 1, wherein the first port (74) is connected via a first connecting line (78) directly to the first hydraulic cylinder (66) and/or wherein the second port (76) is connected via a second connecting line (80) directly to the second hydraulic cylinder (68).

3. Clutch arrangement according to Claim 2, wherein the first connecting line (78) is connected via a first aperture (108) to a tank (84) and/or wherein the second connecting line (80) is connected via a second aperture (110) to a tank (84).

4. Clutch arrangement according to one of Claims 1 to 3, wherein the first port (74) is connected via a first check valve (82) to a tank (84) and/or wherein the second port (76) is connected via a second check valve (86) to a tank (84).

5. Clutch arrangement according to one of Claims 1 to 5 , wherein the first port (74) is connected via a third check valve (104) to the lubricating fluid line (102) and/or wherein the second port (76) is connected via a fourth check valve (106) to the lubricating fluid line (102).

6. Clutch arrangement according to one of Claims 1 to 6, wherein a first aperture (108) is arranged in the connection between the first port (74) and the lubricating fluid line (102) and/or wherein a second aperture (110) is arranged in the connection between the second port (76) and the lubricating fluid line (102).

7. Drivetrain (10) for a motor vehicle (11), having
- a first electric machine (12) for providing drive power, wherein the first electric machine (12) is connected to an electrical energy store (32);
- a differential (16) which can distribute drive power to two driven wheels (18L, 18R) or axles of the motor vehicle (11);
- a first transmission arrangement (14) which connects the first electric machine (12) to the differential (16);
- an internal combustion engine (20);
- a second electric machine (24) which is coupled to the internal combustion engine (20) in order to charge the electrical energy store (32) in a generator mode;
- a second transmission arrangement (22) which connects the internal combustion engine (20) to the differential (16);
- a clutch arrangement (60) of one of claims 1 to 6;
wherein the second transmission arrangement (22) has a first gear stage (G1) and a second gear stage (G2) which can be alternately engaged, for the transmission of drive power from the internal combustion engine (20) to the differential (16), by means of the clutch arrangement (60).

8. Drivetrain according to Claim 7, wherein the clutches (62, 64) are arranged coaxially with respect to a connecting shaft (26) by means of which the second electric machine (24) and the internal combustion engine (20) are coupled to one another.

9. Drivetrain according to Claim 7 or 8, wherein the second electric machine (24) is connected rotationally conjointly to an output shaft of the internal combustion engine (20).

10. Drivetrain according to one of Claims 7 to 9, wherein the second transmission arrangement (24) has a first loose gear (42), which is assigned to the first gear stage (G1), and a second loose gear (50), which is assigned to the second gear stage (G2), wherein the first and the second loose gear (42, 50) are arranged coaxially with respect to a connecting shaft (26) by means of which the second electric machine (24) and the internal combustion engine (20) are coupled to one another.

11. Drivetrain according to Claim 10, wherein the first and the second loose gear (42, 50) are rotatably mounted directly on the connecting shaft (26).

12. Drivetrain according to Claim 10 or 11, wherein the clutch arrangement (60) has a first and a second powershift-capable clutch (62, 64), said clutches being arranged coaxially with respect to the connecting shaft (26), and wherein the first and the second loose gear (42, 50) are arranged in an axial direction between the first and the second powershift-capable clutch (62, 64).

13. Drivetrain according to one of Claims 7 to 12, wherein the transmission ratios of the first and the second gear stage (G1, G2) are selected such that driving of the vehicle (11) by means of the internal combustion engine (20) within intended parameters is only possible at vehicle speeds greater than 30 km/h.

## Revendications

1. Ensemble d'embrayage (60) pour une chaîne cinématique (10) d'un véhicule automobile (11), comprenant
- un premier embrayage humide (62) ;
- un deuxième embrayage humide (64) ;
- un système d'actionneur hydraulique (70) ;
le système d'actionneur (70) présentant un premier cylindre hydraulique (66) pour l'actionnement du premier embrayage (62) et un deuxième cylindre hydraulique (68) pour l'actionnement du deuxième embrayage (64),
le système d'actionneur (70) présentant une pompe d'actionneur (72) entraînée au moyen d'un moteur électrique (90), laquelle peut fonctionner dans deux sens de rotation (92),
la pompe d'actionneur (72) présentant un premier raccord (74) qui est connecté au premier cylindre hydraulique (62) et un deuxième raccord (76) qui est connecté au deuxième cylindre hydraulique (64),
le système d'actionneur (70) actionnant le premier ou le deuxième embrayage (62, 64) en fonction du sens de rotation (92) de la pompe d'actionneur (72), **caractérisé en ce que**
le système d'actionneur hydraulique (70) est réalisé de manière à alimenter les embrayages (72, 74) en fluide de lubrification, le premier raccord (74) et le deuxième raccord (76) étant connectés à une conduite de fluide de lubrification (102) par le biais de laquelle du fluide de lubrification est acheminé aux embrayages (62, 64).

2. Ensemble d'embrayage selon la revendication 1, dans lequel le premier raccord (74) est directement connecté au premier cylindre hydraulique (66) par le biais d'une première conduite de liaison (78) et/ou dans lequel le deuxième raccord (76) est directement connecté au deuxième cylindre hydraulique (68) par le biais d'une deuxième conduite de liaison (80).

3. Ensemble d'embrayage selon la revendication 2, dans lequel la première conduite de liaison (78) est connectée par le biais d'un premier diaphragme (108) à un réservoir (84) et/ou dans lequel la deuxième conduite de liaison (80) est connectée par le biais d'un deuxième diaphragme (110) à un réservoir (84).

4. Ensemble d'embrayage selon l'une quelconque des revendications 1 à 3, dans lequel le premier raccord (74) est connecté par le biais d'un premier clapet anti-retour (82) à un réservoir (84) et/ou dans lequel le deuxième raccord (76) est connecté par le biais d'un deuxième clapet anti-retour (84) à un réservoir (84).

5. Ensemble d'embrayage selon l'une quelconque des revendications 1 à 4, dans lequel le premier raccord (74) est connecté par le biais d'un troisième clapet anti-retour (104) à la conduite de fluide de lubrification (102) et/ou dans lequel le deuxième raccord (76) est connecté par le biais d'un quatrième clapet anti-retour (106) à la conduite de fluide de lubrification (102).

6. Ensemble d'embrayage selon l'une quelconque des revendications 1 à 5, dans lequel un premier diaphragme (108) est disposé dans la liaison entre le premier raccord (74) et la conduite de fluide de lubrification (102) et/ou dans lequel un deuxième diaphragme (110) est disposé dans la liaison entre le deuxième raccord (76) et la conduite de fluide de lubrification (102).

7. Chaîne cinématique (10) pour un véhicule automobile (11), comprenant
- une première machine électrique (12) pour fournir une puissance d'entraînement, la première machine électrique (12) étant connectée à un accumulateur d'énergie électrique (32) ;
- un différentiel (16) qui peut distribuer la puissance d'entraînement à deux roues motrices (18L, 18R) ou à deux essieux du véhicule automobile (11) ;
- un premier ensemble de transmission (14) qui relie la première machine électrique (12) au différentiel (16) ;
- un moteur à combustion interne (20) ;
- une deuxième machine électrique (24) qui est accouplée au moteur à combustion interne (20) afin de charger l'accumulateur d'énergie électrique (32) en mode de générateur ;
- un deuxième ensemble de transmission (22) qui relie le moteur à combustion interne (20) au différentiel (16) ; et
- un ensemble d'embrayage (60) selon l'une quelconque des revendications 1 à 6 ;
le deuxième ensemble de transmission (22) présentant un premier rapport de vitesses (G1) et un deuxième rapport de vitesses (G2), lesquels peuvent être commutés au moyen du système d'embrayage (60) de manière alternée pour transmettre la puissance d'entraînement du moteur à combustion interne (20) au différentiel (16).

8. Chaîne cinématique selon la revendication 7, dans laquelle les embrayages (62, 64) sont disposés coaxialement à un arbre de liaison (26) au moyen duquel la deuxième machine électrique (24) et le moteur à combustion interne (20) sont accouplés l'un à l'autre.

9. Chaîne cinématique selon la revendication 7 ou 8, dans laquelle la deuxième machine électrique (24) est connectée de manière solidaire en rotation à un arbre de sortie du moteur à combustion interne (20).

10. Chaîne cinématique selon l'une quelconque des revendications 7 à 9, dans laquelle le deuxième ensemble de transmission (24) présente un premier pignon fou (42) qui est associé au premier rapport de transmission (G1) et un deuxième pignon fou (50) qui est associé au deuxième rapport de transmission (G2), le premier et le deuxième pignon fou (42, 50) étant disposés coaxialement à un arbre de liaison (26) au moyen duquel la deuxième machine électrique (24) et le moteur à combustion interne (20) sont accouplés l'un à l'autre.

11. Chaîne cinématique selon la revendication 10, dans lequel le premier et le deuxième pignon fou (42, 50) sont supportés de manière rotative directement sur l'arbre de liaison (26).

12. Chaîne cinématique selon la revendication 10 ou 11, dans laquelle l'ensemble d'embrayage (60) présente un premier et un deuxième embrayage à capacité de commutation de charge (62, 64), lesquels sont disposés coaxialement à l'arbre de liaison (26), et dans laquelle le premier et le deuxième pignon fou (42, 50) sont disposés dans la direction axiale entre le premier et le deuxième embrayage à capacité de commutation de charge (62, 64).

13. Chaîne cinématique selon l'une quelconque des revendications 7 à 12, dans laquelle les démultiplications du premier et du deuxième rapport de transmission (G1, G2) sont sélectionnées de telle sorte qu'un entraînement du véhicule (11) soit possible de manière conforme seulement à des vitesses du véhicule supérieures à 30 km/h.
